# EUROPEAN PATENT APPLICATION

(11) **EP 1 901 239 A2**
(43) Date of publication of application: **19.03.2008**
(21) Application number: 07016837.2
(22) Date of filing: 28.08.2007
(51) Int. Cl.: G07C 9/00

(54) **Biometrics authentication apparatus**

(30) Priority: 06.09.2006 JP 2006241157
(71) Applicant: YAMAHA CORPORATION, Naka-ku Hamamatsu-shi Shizuoka-ken 430-8650 (JP)
(72) Inventor: Yoshioka, Yasuo, Hamamatsu-shi Shizuoka-ken, 430-8650 (JP); Kawahara, Takehiko, Hamamatsu-shi Shizuoka-ken, 430-8650 (JP)
(74) Representative: Emde, Eric

(57) **Abstract**

In a biometrics authentication apparatus, a storage unit stores a dictionary containing biometrics information of a registered person. An information acquisition unit acquires biometrics information of a subject person. An authentication unit authenticates validity of the subject person based on an index representing a degree of similarity between the biometrics information of the dictionary stored in the storage unit and the acquired biometrics information. A dictionary management unit updates the dictionary based on the acquired biometrics information in a first case where the index represents a degree of the similarity higher than a first threshold value, and otherwise creates a new dictionary based on the acquired biometrics information and stores the created new dictionary in the storage unit, in a second case where the index represents a degree of the similarity lower than the first threshold value and higher than a second threshold value which is set lower than the first threshold value.

## Description

### BACKGROUND OF THE INVENTION

### [Technical Field of the Invention]

The present invention relates to an authentication technology using a biometric feature amount (referred to hereinafter as "biometrics information"), such as a voiceprint or fingerprint.

### [Description of the Related Art]

There have been conventionally proposed biometrics authentication technologies which determine validity of a target person to be authenticated (referred to hereinafter as a "subject") by collating biometrics information acquired from the subject with a set of biometrics information (referred to hereinafter as a "dictionary") pre-acquired from a registered valid user. Disclosed in Patent Reference, Japanese Patent Laid-open Publication No. Heisei 11-184491, is a configuration that appropriately updates a dictionary when the similarity between biometrics information acquired from a subject and biometrics information of a dictionary exceeds a threshold value (namely, when the subject is a valid user), in order to maintain the precision of authentication even when there is a change in biometrics information of a valid user.

However, even with a configuration in which a dictionary is occasionally updated, as in Patent Reference Japanese Patent Laid-open Publication No. Heisei 11-184491, it is difficult to maintain the precision of authentication at a high level when biometrics information changes dramatically in a short period of time depending on the physical state of a valid user or surrounding environments during authentication. For example, biometrics information (for example, a cepstrum) acquired from the voice of a person changes dramatically between immediately after he wakes up and when he is active during the daytime. Also, the person's speaking style (particularly, the volume or quality of the person's voice) is significantly different between a silent environment and a noisy environment. Provided that a valid user is intended to be appropriately authenticated even in the above-mentioned respective cases with different times or environments based on the configuration of Patent Reference Japanese Patent Laid-open Publication No. Heisei 11-184491 where one dictionary is used for authentication, there will be a problem that the possibility for an invalid or wrong subject to be misrecognized to be valid increases.

### SUMMARY OF THE INVENTION

The present invention has been made in view of the above problems, and it is an object of the present invention to solve the above problems to maintain the precision of authentication at a high level even in the case where there is a change in biometrics information.
In accordance with a first aspect of the present invention, the above and other objects can be accomplished by the provision of a biometrics authentication apparatus comprising: storage means for storing a dictionary containing biometrics information of a registered person; information acquisition means for acquiring biometrics information of a subject person; authentication means for authenticating validity of the subject person based on an index representing a degree of similarity between the biometrics information of the dictionary stored in the storage means and the biometrics information acquired by the information acquisition means; and dictionary management means for updating the dictionary in the storage means based on the biometrics information acquired by the information acquisition means in a first case where the index represents a degree of the similarity higher than a first threshold value, and otherwise creating a new dictionary based on the biometrics information acquired by the information acquisition means and storing the created new dictionary in the storage means, in a second case where the index represents a degree of the similarity lower than the first threshold value and higher than a second threshold value which is set lower than the first threshold value.
According to this aspect, the new dictionary is created in the second case. Therefore, even when biometrics information of a valid user (i.e., registered person) changes on a short-term basis, it is possible to maintain the precision of authentication at a high level. Further, the first threshold value and the second threshold value may be modified according to an operation of an operating unit by the user.

In a preferred embodiment of the present invention, the authentication means authenticates the validity of the subject person in the first case, and denies the validity of the subject person in a third case where the index represents a degree of the similarity lower than the second threshold value.
In this embodiment, the first threshold value or second threshold value, which is a reference for determination as to whether to update the existing dictionary add a new dictionary, is also used as a reference for determination of the validity of the subject person. Therefore, the processing is simplified as compared with a configuration in which different parameters are used for the respective determinations.

In a preferred embodiment of the present invention, the biometrics authentication apparatus further comprises auxiliary authentication means for authenticating the validity of the subject person separately from the authentication means, wherein the dictionary management means creates the new dictionary when the auxiliary authentication means authenticates the validity of the subject person in the second case, and does not create the new dictionary when the auxiliary authentication means denies the validity of the subject person in the second case.
In this embodiment, the new dictionary is created only in the case where the validity of the subject person is determined by the auxiliary authentication means when the biometrics information is between the first threshold value and the second threshold value. Therefore, it is possible to effectively exclude a risk that the new dictionary is created inadvertently based on biometrics information acquired from a wrong subject person other than a valid user.

A biometrics authentication apparatus according to a second aspect of the present invention comprises: storage means for storing a plurality of dictionaries each containing biometrics information of a registered person; information acquisition means for acquiring biometrics information of a subject person; authentication means for authenticating validity of the subject person based on a plurality of indexes corresponding to the plurality of the dictionaries, each index representing a degree of the similarity between the biometrics information of the corresponding dictionary stored in the storage means and the biometrics information acquired by the information acquisition means; and dictionary management means being operative in a first case where a maximum index indicating the highest degree among the plurality of the indexes represents a degree of the similarity higher than a first threshold value, for updating a dictionary corresponding to the maximum index among the plurality of the dictionaries in the storage means, based on the biometrics information acquired by the information acquisition means, and being operative in a second case where the maximum index represents a degree of the similarity lower than the first threshold value and higher than a second threshold value which is set lower than the first threshold value, for creating a new dictionary based on the biometrics information acquired by the information acquisition means and storing the created new dictionary in the storage means.
According to this second aspect of the invention, the new dictionary is created in the second case. Therefore, similarly to the first aspect of the invention, even when biometrics information of a valid user changes on a short-term basis, it is possible to maintain the precision of authentication at a high level.

In the biometrics authentication apparatus according to the second aspect, there is preferably provided dictionary reducing means that executes reducing of the dictionary when a total number of the dictionaries stored in the storage means has reached a predetermined number.
In this configuration having the dictionary reducing means, it is possible to reduce a desired capacity of the storage means. The maximum value of the total number of the dictionaries may be modified according to an operation of an operating unit by a user.

For example, in the biometrics authentication apparatus, the dictionary management means counts times of updating for each of the dictionaries stored in the storage means when each dictionary is updated by the dictionary management means. Then the dictionary reducing means deletes from the storage means a dictionary which has the counted times of updating smaller than a threshold count.
In the biometrics authentication apparatus, the dictionary management means also counts times of unupdating for each of the dictionaries stored in the storage means when each dictionary is not updated while other dictionary is updated by the dictionary management means. Then, the dictionary reducing means deletes from the storage means a dictionary which has the counted times of unupdating greater than a threshold count. According to this aspect, a dictionary whose frequency of use is relatively low is deleted among the plurality of dictionaries. Therefore, it is possible to reduce a desired capacity of the storage means while maintaining the precision of authentication at a high level. Moreover, the threshold count to be compared with the number of update times or the number of unupdate times may be modified according to an operation of the operating unit by the user.
Alternatively, the dictionary management means evaluates a similarity between the plurality of the dictionaries stored in the storage means. Then, the dictionary reducing means reduces a pair of dictionaries whose similarity exceeds a threshold degree into one dictionary by merging the pair of the dictionaries with each other or deleting one of the pair of the dictionaries.
In this case, because a plurality of dictionaries with a high similarity are reduced into one dictionary, it is possible to reduce a desired capacity of the storage means without damaging an action of coping with a change in biometrics information. The threshold value to be compared with the similarity of each dictionary may be modified according to an operation of the operating unit by the user.

The biometrics authentication technology according to each of the above aspects is also specified as a method for authenticating a subject person. A biometrics authentication method according to one aspect of the present invention comprises: acquiring biometrics information of a subject person; authenticating validity of the subject person based on an index representing a degree of similarity between biometrics information of a registered person contained in a dictionary stored in a storage and the acquired biometrics information of the subject person; and updating the dictionary in the storage based on the acquired biometrics information in a first case where the index represents a degree of the similarity higher than a first threshold value, and otherwise creating a new dictionary based on the acquired biometrics information and storing the created new dictionary in the storage in a second case where the index represents a degree of the similarity lower than the first threshold value and higher than a second threshold value which is set lower than the first threshold value.
According to this method, it is possible to accomplish the same function and effect as those of the biometrics authentication apparatus of the present invention.

The biometrics authentication apparatus according to the present invention is implemented by hardware (electronic circuit) such as a digital signal processor (DSP) exclusively used for each process. Alternatively, the present biometrics authentication apparatus may be implemented by cooperation between a universal computing device, such as a central processing unit (CPU), and a machine readable medium containing a program. Namely, the machine readable medium is provided for use in a computer having a storage for storing a dictionary containing biometrics information of a registered person. The machine readable medium contains program instructions executable by the computer for performing: an information acquisition process of acquiring biometrics information of a subject person; an authentication process of authenticating validity of the subject person based on an index representing a degree of similarity between the biometrics information of the registered person contained in the dictionary stored in the storage and the biometrics information of the subject person acquired in the information acquisition process; and a dictionary management process of updating the dictionary in the storage based on the biometrics information acquired in the information acquisition process in a first case where the index represents a degree of the similarity higher than a first threshold value, and otherwise creating a new dictionary based on the biometrics information acquired in the information acquisition process and storing the created new dictionary in the storage in a second case where the index represents a degree of the similarity lower than the first threshold value and higher than a second threshold value which is set lower than the first threshold value.
According to this program, it is also possible to accomplish the same function and effect as those of the biometrics authentication apparatus of the present invention. The program of the present invention is provided to a user in a form stored in a portable recording medium such as a CD-ROM, and then installed in the computer. Alternatively, this program may be provided from a server apparatus in a manner of distribution over a network and then installed in the computer.

### BRIEF DESCRIPTION OF THE DRAWINGS

FIG. 1 is a block diagram showing the configuration of a biometrics authentication apparatus according to an embodiment of the present invention.
FIG. 2 is a flowchart illustrating a biometrics authentication process by a controller.
FIG. 3 is a flowchart illustrating a biometrics authentication process by the controller.
FIG. 4 is a flowchart illustrating a biometrics authentication process by the controller.

### DETAILED DESCRIPTION OF THE INVENTION

### <A: Configuration of Biometrics Authentication Apparatus>

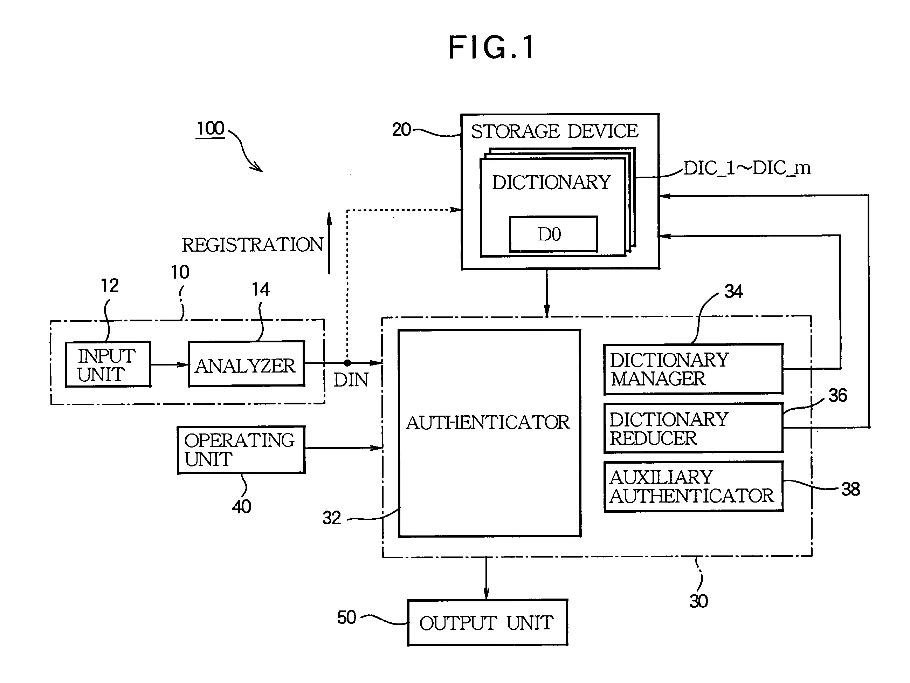

FIG. 1 is a block diagram showing the configuration of a biometrics authentication apparatus according to an embodiment of the present invention. The biometrics authentication apparatus, denoted by reference numeral 100, is adapted to determine validity of a subject (whether the subject is a pre-registered regular user), based on a voice when the subject speaks a specific word, and is installed in various electronic appliances including a mobile telephone, information processing device, etc. As shown in FIG. 1, the biometrics authentication apparatus 100 comprises an information acquisition unit 10, a storage device 20, a controller 30, an operating unit 40, and an output unit 50.
The information acquisition unit 10 is means (information acquisition means) that acquires biometrics information DIN of a subject, and includes an input unit 12 and an analyzer 14. The input unit 12 is a device (for example, a microphone) that receives a voice spoken by the subject. The analyzer 14 analyzes a voice inputted to the input unit 12 to generate biometrics information DIN reflecting features of that voice. For example, the analyzer 14 generates a cepstral time-series vector sequence of a voice spoken by the subject as biometrics information DIN. To this end, means for executing various computing operations including a frequency analysis (for example, a Fast Fourier Transform (FFT) process) is preferably employed as the analyzer 14.

The storage device 20 is means (storage means) for storing dictionaries DIC DIC_1~DIC_m or various parameters used for an authentication process. Various memory devices including a magnetic memory, semiconductor memory, optical memory, etc. are preferably employed as the storage device 20. The storage device 20 may be a device fixedly installed in the biometrics authentication apparatus 100 or a portable device (memory) detachably installed in the biometrics authentication apparatus 100. The dictionaries DIC are template files including biometrics information DO which is compared (collated) with biometrics information DIN during authentication. As shown in FIG. 1, the storage device 20 has a storage area with a capacity capable of storing a plurality (m number in FIG. 1) of dictionaries DIC_1~DIC_m.

The controller 30 is a device that controls the respective components of the biometrics authentication apparatus 100. In the present embodiment, the controller 30 is a central processing unit (CPU) that functions as an authenticator 32, dictionary manager 34, dictionary reducer 36, and auxiliary authenticator 38 depending on execution of a program. Alternatively, a hardware circuit, such as a digital signal processor (DSP) including electronic circuits for implementing the functions of the above respective components, may be employed as the controller 30.

The authenticator 32 determines validity of a subject by collating biometrics information DIN supplied from the information acquisition unit 10 (analyzer 14) with the biometrics information DO of the dictionaries DIC stored in the storage device 20. The result of the determination by the authenticator 32 is outputted to the output unit 50.
The dictionary manager 34 executes update of each dictionary DIC stored in the storage device 20 or addition of a new dictionary DIC to the storage device 20. The dictionary reducer 36 reduces the total number m of dictionaries DIC stored in the storage device 20 by merging the dictionaries DIC together or deleting any dictionary DIC therefrom. The details to be processed by the dictionary manager 34 or dictionary reducer 36 or the respective processing times thereof will be described later in detail. The auxiliary authenticator 38 is means for auxiliarily authenticating the validity of the subject separately from the authentication by the authenticator 32 (this authentication will hereinafter be referred to as "auxiliary authentication").

The operating unit 40 includes a plurality of operating elements operated by a user. The user can instruct the controller 30 to modify various parameters used for authentication or start authentication, by properly operating the operating unit 40. The output unit 50 is means for outputting the result of the authentication by the authenticator 32. For example, a display for outputting the authentication result as an image or a speaker for outputting the authentication result as a sound is preferably employed as the output unit 50.

### <B: Operation of Biometrics Authentication Apparatus>

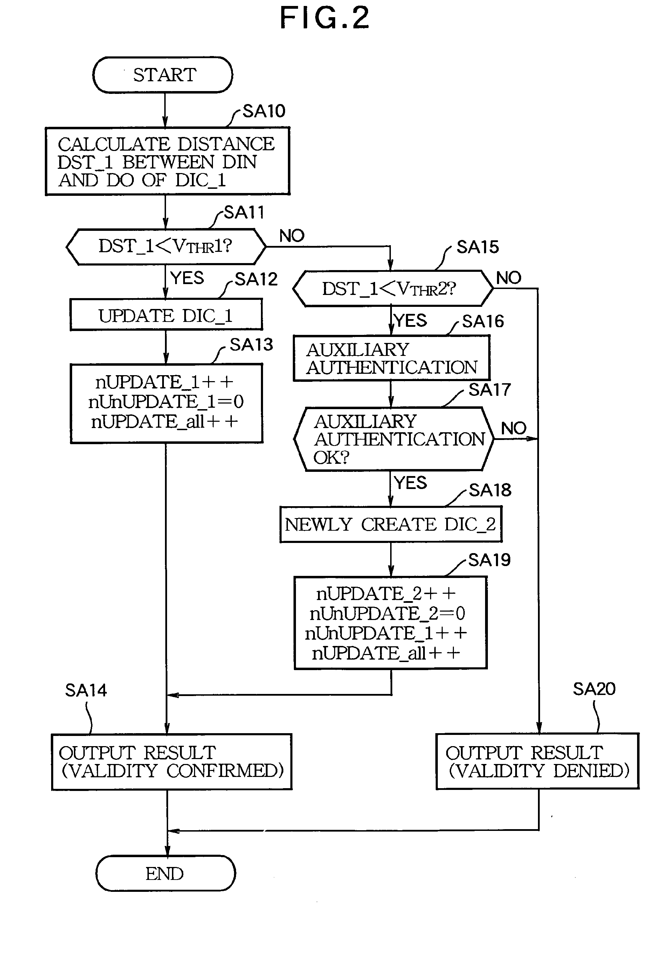

Next, the operation of the biometrics authentication apparatus 100 with the above-stated configuration will be described with reference to FIGS. 2 to 4.
First, a description will be given of an operation of newly registering a dictionary DIC_1 of a valid user (this registration will hereinafter be referred to as "initial registration"). The user instructs the apparatus 100 to start the initial registration, by operating the operating unit 40, and then speaks a specific word to the input unit 12. The analyzer 14 extracts a period in which the user actually spoke, from a voice inputted to the input unit 12, and generates biometrics information DO (for example, a cepstral vector sequence) by analyzing a waveform in the extracted period. Various techniques well known in the art can be employed for the generation of the biometrics information DO. As shown by a dashed line in FIG. 1, the biometrics information DO generated by the analyzer 14 is stored in the storage device 20 as an initial dictionary DIC_1.

If the initial registration of the dictionary DIC_1 is completed through the above procedure, then the controller 30 executes a process of FIG. 2 whenever authentication is required. When the authentication is required may be, for example, when an electronic appliance equipped with the biometrics authentication apparatus 100 begins to operate with application of power or when the electronic appliance starts a certain operation (for example, an access to specific information). If the authentication is started, a subject speaks a desired word to the input unit 12. The analyzer 14 generates biometrics information DIN from the subject's voice through the same process as that in the initial registration, and outputs the generated biometrics information DIN to the controller 30.

If the process of FIG. 2 is started, the authenticator 32 calculates a distance DST_1 between the biometrics information DIN acquired from the analyzer 14 and the biometrics information DO of the dictionary DIC_1 stored in the storage device 20 (Step SA10). The distance DST_i (i is an integer satisfying 1≤i≤m) is an index representing the similarity (matching degree) between the biometrics information DIN and the biometrics information DO of the dictionary DIC_i. For the calculation of the distance DST_i can be used various pattern matching techniques including dynamic programming (DP) matching that calculates a normalized distance between two types of vector sequences. When the distance DST_i is shorter, the biometrics information DIN and the biometrics information DO of the dictionary DIC_i are more similar (namely, the possibility that the subject will be a valid user is higher).

Then, the authenticator 32 determines whether the distance DST_1 calculated at step SA10 is smaller than a threshold value VTHR1 (Step SA11). The threshold value VTHR1 is a parameter stored in the storage device 20, which can be properly modified by the controller 30 according to an operation with respect to the operating unit 40. It should be noted here that the threshold value VTHR1 is set to such a small value as to ensure the precision of authentication at a sufficiently high level (namely, a value within the range of values representing a sufficiently high similarity, among values which can be assumed by the distance DST_1). In this connection, where the distance DST_1 is smaller than the threshold value VTHR1 (that is, where the biometrics information DIN and the biometrics information DO are sufficiently similar), the controller 30 executes processes of step SA12 and step SA13 and then informs the subject through the output unit 50 that the subject has been authenticated as a valid user (Step SA14). If the authentication is appropriately completed in the above manner, various processes by the electronic appliance are enabled.

At step SA12, the controller 30 updates the dictionary DIC_1 in the storage device 20 based on the biometrics information DIN newly acquired during the present authentication (Step SA12). For example, the controller 30 stores the average of the biometrics information DO of the existing dictionary DIC_1 and the new biometrics information DIN in the storage device 20 as new biometrics information DO of the dictionary DIC_1. Alternatively, at step SA12, the biometrics information DO which is stored in the storage device 20 may be replaced with the new biometrics information DIN.

At the following step SA13, the controller 30 reflects this dictionary DIC_1 update in each parameter stored in the storage device 20. In more detail, the controller 30 adds "1s" to a parameter nUPDATE_l and parameter nUPDATE_all, respectively, and initializes a parameter nUnUPDATE_1 to "0". The parameter nUPDATE_i is the number of updates of the dictionary DIC_i representing how many times the dictionary DIC_i was updated up to now. The parameter nUPDATE_all is the total number of updates of all dictionaries DIC stored in the storage device 20. The parameter nUnUPDATE_i is the number of unupdates of the dictionary DIC_i representing how many times the dictionary DIC_i was not updated in authentications.

In the case where it is determined at step SA11 that the distance DST_1 is not smaller than the threshold value VTHR1, the controller 30 determines whether the distance DST_1 is smaller than a threshold value VTHR2 (Step SA15). The threshold value VTHR2 is a parameter stored in the storage device 20, which can be modified by the controller 30 according to an operation with respect to the operating unit 40. It should be noted here that the threshold value VTHR2 is set to a value larger than the threshold value VTHR1 (namely, a value corresponding to a value of the distance DST_1 representing a lower similarity than the threshold value VTHR1).

In the case where the distance DST_1 is within the range between the threshold value VTHR1 and the threshold value VTHR2, the biometrics information DIN and the biometrics information DO are not so similar as to immediately recognize the subject to be valid, compared with the case where the distance DST_1 is smaller than the threshold value VTHR1, and the biometrics information DIN and the biometrics information DO are also not so dissimilar as to definitely deny the validity of the subject. For this reason, when the distance DST_1 is smaller than the threshold value VTHR2 (VTHR1≤DST_1<VTHR2), the validity of the subject is determined by auxiliarily considering the result of auxiliary authentication by the auxiliary authenticator 38 (Step SA16 and Step SA17).

A password pre-registered by a valid user is stored in the storage device 20. The auxiliary authenticator 38 prompts the subject to input a password (Step SA16), and then determines whether a password that the subject inputted through the operating unit 40 in response thereto is the same as the password registered in the storage device 20 (Step SA17). When the determination of step SA17 is positive, the controller 30 executes processes of step SA18 and step SA19 and then proceeds to step SA14. That is, after the fact that the authentication has been appropriately completed is informed from the output unit 50, various processes by the electronic appliance are enabled.

The case where the distance DST_1 is larger than or equal to the threshold value VTHR1, but the subject is determined to be a valid user by virtue of the auxiliary authentication, will probably be a case where the characteristics of the valid user's voice changed depending on the body state of the valid user or surrounding environments. In this regard, at step SA18, the dictionary manager 34 creates a new dictionary DIC_2 including the biometrics information DIN acquired in the present authentication and stores the created dictionary DIC_2 in the storage device 20, so that the subject can be determined to be a valid user at once (namely, without executing the auxiliary authentication by the auxiliary authenticator 38) when biometrics information DIN of the same characteristics as those in the present authentication is inputted in future authentications. Also, the controller 30 reflects this dictionary DIC_2 addition in each parameter stored in the storage device 20 (Step SA19). That is, the controller 30 adds "1s" to a parameter nUPDATE_2 (the number of updates of the dictionary DIC_2) and parameter nUPDATE_all, respectively, and initializes a parameter nUnUPDATE_2, which is the number of unupdates of the dictionary DIC_2, to "0". The controller 30 further adds "1" to the parameter nUnUPDATE_1 of the dictionary DIC_1 not updated in the present authentication.

In the case where the biometrics information DIN and the biometrics information DO are so dissimilar that the distance DST_1 is larger than or equal to the threshold value VTHR2 (Step SA15:NO) or in the case where the passwords are not the same in the auxiliary authentication (Step SA17: NO), the possibility that the subject will not be a valid user is high. In this connection, when the determination of step SA15 or step SA17 is negative, the controller 30 informs the subject through the output unit 50 that the validity of the subject has been denied (Step SA20). If the validity of the subject is denied in the above manner, various processes by the electronic appliance are disabled.

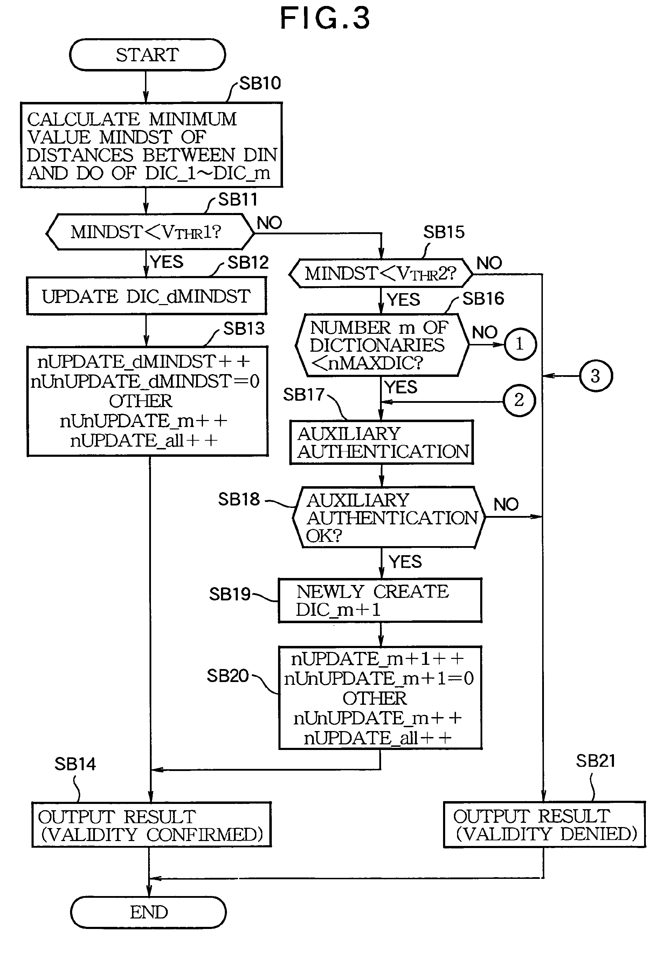

If a plurality of dictionaries DIC_1~DIC_m are stored in the storage device 20 by the process of FIG. 2, then the controller 30 executes authentication according to a procedure illustrated in FIG. 3 whenever the authentication is required. Upon start of the authentication, a subject speaks a desired word to the input unit 12. The analyzer 14 generates biometrics information DIN from the subject's voice and outputs the generated biometrics information DIN to the controller 30.

In the process of FIG. 3, first, the authenticator 32 calculates distances DST_1~DST_m based on the respective biometrics information DO of the m dictionaries DIC_1~DIC_m stored in the storage device 20 and the biometrics information DIN acquired by the analyzer 14, and specifies a minimum value (referred to hereinafter as a "minimum distance") MINDST of the distances DST_1~DST_m (Step SB10). That is, the minimum distance MINDST is a distance between biometrics information DO with a highest similarity with the biometrics information DIN, among the m types of biometrics information DO included in the dictionaries DIC_1~DIC_m, and the biometrics information DIN.

Thereafter, the authenticator 32 determines whether the minimum distance MINDST is smaller than the threshold value VTHR1 (Step SB11). Where the biometrics information DIN and the biometrics information DO are so similar that the minimum distance MINDST is smaller than the threshold value VTHR1, the subject can be recognized as a valid user. In this connection, when the determination of step SB11 is positive, the controller 30 executes step SB12 and step SB13 and then informs the subject through the output unit 50 that the validity of the subject has been authenticated (Step SB14). If the validity of the subject is confirmed in the above manner, various processes by the electronic appliance are enabled.

At step SB12, the dictionary manager 34 updates a dictionary DIC_dMINDST with contents corresponding to the biometrics information DIN through the same process as that of step SA12 of FIG. 2. The dictionary DIC_dMINDST is a dictionary DIC including biometrics information DO whose distance with the biometrics information DIN is the minimum distance MINDST. Also, the controller 30 reflects the update of step SB12 in each parameter stored in the storage device 20 (Step SB13). That is, the controller 30 adds "1s" to a parameter nUPDATE_dMINDST (the number of updates of the dictionary DIC_dMINDST) and parameter nUPDATE_all, respectively, and initializes a parameter nUnUPDATE_dMINDST (the number of unupdates of the dictionary DIC_dMINDST) to "0". The controller 30 further adds "1s" respectively to parameters nUnUPDATE_1~nUnUPDATE_m (excluding nUnUPDATE_dMINDST) representing the numbers of unupdates of dictionaries DIC other than the dictionary DIC_dMINDST, respectively.

In the case where it is determined at step SB11 that the minimum distance MINDST is larger than or equal to the threshold value VTHR1, the controller 30 determines whether the minimum distance MINDST is smaller than the threshold value VTHR2, in the same manner as step SA15 of FIG. 2 (Step SB15). When the determination of step SB15 is positive, the controller 30 determines whether the total number m of dictionaries DIC stored in the storage device 20 is larger than or equal to a maximum value nMAXDIC (Step SB16). The maximum value nMAXDIC is stored in the storage device 20 and modified by the controller 30 according to an operation with respect to the operating unit 40. When the number m of dictionaries is determined to be smaller than the maximum value nMAXDIC at step SB16, the auxiliary authentication by the auxiliary authenticator 38 is executed in the same manner as step SA16 and step SA17 of FIG. 2 (Step SB17 and Step SB18). In the case where the subject is determined to be a valid user at step SB18, the dictionary manager 34 creates a new dictionary DIC_m+1 based on the biometrics information DIN acquired in the present authentication (Step SB19). Also, the controller 30 reflects the creation of the dictionary DIC_m+1 in each parameter stored in the storage device 20 through the same process as that of step SA19 of FIG. 2 (Step SB20).

When the minimum distance MINDST is determined to be larger than or equal to the threshold value VTHR2 at step SB15 or when the subject is determined not to be a valid user at step SB18, the controller 30 informs the subject through the output unit 50 that the validity of the subject has been denied (Step SB21) and then disables various processes by the electronic appliance, in the same manner as FIG. 2.

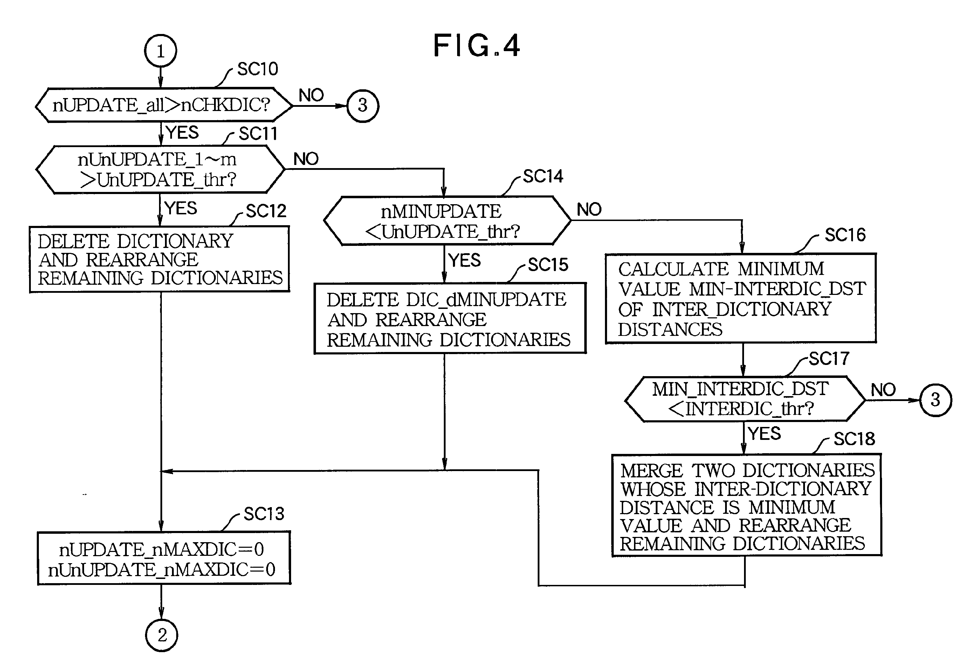

In the case where it is determined at step SB16 that the total number m of dictionaries DIC has reached the maximum value nMAXDIC (m≥nMAXDIC), the controller 30 executes a process of deleting an existing dictionary DIC stored in the storage device 20, as shown in FIG. 4. The dictionary DIC deletion to be hereinafter described makes it possible to, at step SB19 of FIG. 3, add a new dictionary DIC within a range not exceeding the maximum value nMAXDIC.

In the process of FIG. 4, first, the controller 30 determines whether the parameter nUPDATE_all exceeds a threshold value nCHKDIC (Step SC10). The controller 30 proceeds to step SB21 of FIG. 3 when the determination of step SC10 is negative, and to step SC11 when the determination of step SC10 is positive. That is, the process of deleting an existing dictionary DIC is executed by taking, as a momentum, the fact that the parameter nUPDATE_all, which is the total number of updates of all dictionaries DIC_1~DIC_m, exceeds the threshold value nCHKDIC. The threshold value nCHKDIC stored in the storage device 20 can be properly modified by the controller 30 according to an operation with respect to the operating unit 40.

At step SC11, the controller 30 determines whether there is a value exceeding a threshold value UnUPDATE_thr, among the m parameters nUnUPDATE_1~nUnUPDATE_m corresponding respectively to the dictionaries DIC (Step SC11). The parameter nUnUPDATE_i is incremented when the dictionary DIC_i is not used for the authentication at step SA11 or step SB11 (not updated at step SA12 or step SB12). As a result, the larger parameter nUnUPDATE_i means that the frequency of use of the dictionary DIC_i is lower (namely, the frequency of acquisition of biometrics information DIN similar to the biometrics information DO of the dictionary DIC_i from the subject is lower). In this connection, when the determination of step SC11 is positive, the dictionary reducer 36 deletes one dictionary DIC whose parameter nUnUPDATE_i exceeds the threshold value UnUPDATE_thr, from the storage device 20, and rearranges the remaining (m-1) dictionaries DIC such that the numbers i of the respective dictionaries DIC are consecutive from "1" to "m-1" (Step SC12). Thereafter, the controller 30 initializes a parameter nUPDATE_nMAXDIC and parameter nUnUPDATE_nMAXDIC of a dictionary DIC_nMAXDIC (not created at this time) to be stored in a storage area secured due to the deletion at step SC12, respectively, to 0s (Step SC13) and then proceeds to step SB17 of FIG. 3.

When the determination of step SC11 is negative, the controller 30 determines whether a parameter nMINUPDATE is smaller than a threshold value UPDATE_thr (Step SC14). The parameter nMINUPDATE is a minimum value of the m parameters nUPDATE_1~nUPDATE_m corresponding respectively to the dictionaries DIC. The threshold value UPDATE_thr can be modified according to an operation with respect to the operating unit 40. The parameter nUPDATE_i is incremented whenever the dictionary DIC_i is used for the authentication at step SA11 or step SB11. Therefore, the smaller parameter nUPDATE_i means that the frequency of use of the dictionary DIC_i is lower. In this connection, when the determination of step SC14 is positive, the dictionary reducer 36 deletes one dictionary DIC_dMINUPDATE whose parameter nUPDATE_i is the minimum value nMINUPDATE, from the storage device 20, and rearranges the remaining (m-1) dictionaries DIC such that the numbers i of the respective dictionaries DIC are consecutive from "1" to "m-1" (Step SC15). Thereafter, the controller 30 performs the parameter updates at step SC13 and then proceeds to step SB17 of FIG. 3.

When the determination of step SC14 is negative, a process (Step SC16-Step SC18) of merging two dictionaries DIC with similar biometrics information DO among the m dictionaries DIC_1~DIC_m stored in the storage device 20 is executed. At step SC16, the controller 30 calculates respective inter-dictionary distances with respect to all combinations for selection of two dictionaries DIC among the m dictionaries DIC_1~DIC_m stored in the storage device 20, and specifies a minimum value MIN_INTERDIC_DST of the calculated distances. Also, the controller 30 determines whether the minimum value MIN_INTERDIC_DST is smaller than a threshold value INTERDIC_thr (Step SC17). The threshold value INTERDIC_thr is stored in the storage device 20 and modified according to an operation with respect to the operating unit 40.

The controller 30 proceeds to step SB21 of FIG. 3 when the determination of step SC17 is negative, and to step SC18 when the determination of step SC17 is positive. At step SC18, the dictionary reducer 36 merges two dictionaries DIC whose inter-dictionary distance is the minimum value MIN_INTERDIC_DST (namely, two dictionaries DIC of a combination with the most similar biometrics information DO), and rearranges the remaining (m-1) dictionaries DIC such that the numbers i of the respective dictionaries DIC are consecutive from "1" to "m-1" (Step SC18). The merging of two dictionaries DIC may be, for example, a process of newly creating one dictionary DIC including the average of the respective biometrics information DO and deleting the existing two dictionaries DIC. At step SC18, any one of the two dictionaries DIC whose inter-dictionary distance is calculated as the minimum value MIN_INTERDIC_DST may be simply deleted. After executing step SC18, the controller 30 performs the parameter updates at step SC13 and then proceeds to step SB17 of FIG. 3.

As described above, in the present embodiment, in the case where the distance (DST_1 of FIG. 2 or MINDST of FIG. 3) between biometrics information DIN and biometrics information DO is within the range between the threshold value VTHR1 and the threshold value VTHR2, a dictionary DIC corresponding to the biometrics information DIN is newly created. For example, separate dictionaries DIC are created with respect to respective biometrics information DIN immediately after a person wakes up and when he is active during the daytime. Also, separate dictionaries DIC are created with respect to respective biometrics information DIN in a silent environment and a noisy environment. Therefore, even when biometrics information DIN acquired from a valid user changes on a short-term basis, it is possible to maintain the precision of authentication at a high level.

Also, in the case where the distance is larger than or equal to the threshold value VTHR2, the validity of the subject is denied. In the case where the distance is between the threshold value VTHR1 and the threshold value VTHR2, the validity of the subject is auxiliarily authenticated by the auxiliary authenticator 38. Accordingly, although a new dictionary DIC is created even when the biometrics information DIN and the biometrics information DO are so dissimilar that the distance is larger than or equal to the threshold value VTHR1, it is possible to effectively exclude a risk that a new dictionary DIC may be created based on biometrics information DIN acquired from a subject other than a valid user.

Also, in the case where the distance between biometrics information DIN and biometrics information DO of a dictionary DIC_i is smaller than the threshold value VTHR1, the dictionary DIC_i is updated (Step SA12 of FIG. 2 or Step SB12 of FIG. 3). As a result, even where biometrics information DIN of a valid user changes slowly over a long period of time under the condition that the distance between the biometrics information DIN and the biometrics information DO is within a range smaller than the threshold value VTHR1, it is possible to cope with a change in the biometrics information DIN while maintaining the precision of authentication at a high level. In addition, the threshold value VTHR1 or threshold value VTHR2, which is a reference for determination of the validity of the subject, is also used as a reference to determine whether to update or add a dictionary DIC. Therefore, the amount of load to be processed by the controller 30 is advantageously reduced as compared with a configuration that determines whether to update or add a dictionary DIC by taking parameters different from the threshold value VTHR1 and threshold value VTHR2 as references.

On the other hand, as a method for creating a plurality of dictionaries used for authentication may be considered, for example, a method for prompting a user to speak a plurality of times while changing his speaking style and creating a plurality of dictionaries based on biometrics information DO acquired from speeches of the respective times. In this method, however, the user has the inconvenience of having to speak while changing the speaking style. In contrast, in the present embodiment, a dictionary DIC is automatically updated or created according to whether the distance between biometrics information DIN and biometrics information DO is larger or smaller than the threshold value VTHR1 and threshold value VTHR2. Therefore, the present embodiment has an advantage in that the precision of authentication can be occasionally improved without letting the user recognize the update or creation of a dictionary DIC.

Also, even though the user changes the speaking style, the actual speech may not be so changed as to exhibit a difference between speeches immediately after he wakes up and when he is active during the daytime, or a difference between speeches in a silent environment and a noisy environment. For this reason, in the method which compulsorily changes the speaking style, it is difficult to execute authentication of high precision even where biometrics information DIN changes dramatically in a short period of time (for example, between early morning and daytime). The present embodiment also solves this problem.

In the present embodiment, a user can properly modify various parameters used for authentication or update, addition or deletion of a dictionary DIC. Hence, it is possible to realize authentication compliant with the user's request. For example, as the threshold value VTHR1 and the threshold value VTHR2 become larger, the update or addition of a dictionary DIC is executed at a higher frequency. In contrast, as the threshold value VTHR1 and the threshold value VTHR2 become smaller, authentication of higher precision is realized. In addition, when the maximum number nMAXDIC of dictionaries DIC is larger, more dictionaries DIC can be stored in the storage device 20 to correspond to more various speeches. In contrast, when the maximum number nMAXDIC of dictionaries DIC is smaller, the capacity of data stored in the storage device 20 can be reduced.

### <C: Modified Embodiments>

Various modifications can be applied to the above embodiment. Various modified embodiments will hereinafter be described in detail. The following embodiments may also be appropriately combined.

### (1) Modified Embodiment 1

Although a configuration for executing authentication based on biometrics information DIN extracted from a voice has been disclosed in the above embodiment for illustrative purposes, the biometrics information DIN used for the authentication may be properly modified. For example, various feature amounts, such as a vein pattern of each part of the body such as a hand or retina, a face image, a fingerprint, an iris, or a handwriting, may be used for the authentication as the biometrics information DIN. Where this biometrics information DIN is used, a device for recognizing an image of each part of the body or the handwriting is employed as the input unit 12. Because the biometrics information DIN such as the handwriting or face shape, together with the voice illustrated in the above embodiment, may change dramatically in a short period of time, the present invention in which authentication of high precision is realized irrespective of a change in the biometrics information DIN is particularly preferably employed in the biometrics authentication apparatus 100 using this biometrics information DIN for the authentication.

### (2) Modified Embodiment 2

Although a configuration in which the auxiliary authenticator 38 executes the auxiliary authentication based on a password inputted from the operating unit 40 has been disclosed in the above embodiment for illustrative purposes, the auxiliary authentication method may be properly modified. For example, a configuration for using a password inputted as a voice from the input unit 12 for the authentication may be employed instead of or together with the configuration for using the password inputted from the operating unit 40 for the authentication. That is, the auxiliary authenticator 38 executes the authentication by specifying a password inputted as a voice to the input unit 12 using a voice recognition technique and collating the specified password with a password registered in the storage device 20. It will be understood from the above illustration that the auxiliary authenticator 38 is means for executing the auxiliary authentication separately from the authentication by the authenticator 32 (in more detail, based on information (a password) acquired from the subject separately from biometrics information DIN).

### (3) Modified Embodiment 3

Although a configuration for deleting dictionaries DIC one by one has been disclosed in the above embodiment for illustrative purposes, a configuration for deleting a plurality of dictionaries DIC at a time may be employed. For example, at step SC12 of FIG. 4, a plurality of dictionaries DIC whose parameter nUnUPDATE_i exceeds the threshold value UnUPDATE_thr may be deleted.

### (4) Modified Embodiment 4

The input unit 12 and the analyzer 14 may be properly omitted from the biometrics authentication apparatus 100. For example, a configuration in which a terminal with the input unit 12 and analyzer 14 is connected to the biometrics authentication apparatus 100 through a communication network may be employed. In this configuration, the biometrics authentication apparatus 100 receives biometrics information DIN generated by the analyzer 14 of the terminal over the communication network and then uses the received biometrics information DIN for authentication. In the above configuration, means for receiving the biometrics information DIN from the communication network functions as information acquisition means in one embodiment of the present invention.

### (5) Modified Embodiment 5

Although a configuration in which the distance DST_i between biometrics information DIN and biometrics information DO is used for authentication has been disclosed in the above embodiment for illustrative purposes, an index representing the similarity between the biometrics information DIN and the biometrics information DO is not limited to the distance. For example, a configuration in which the authentication is executed based on a parameter (index) increasing as the biometrics information DIN and the biometrics information DO become more similar may be employed. In this configuration, the threshold value VTHR2 is set to a value smaller than the threshold value VTHR1 (namely, a value representing dissimilarity). Then, it is determined at step SA11 or step SB11 whether the index is larger than or equal to the threshold value VTHR1 (namely, whether the index represents similarity), and it is determined at step SA15 or step SB15 whether the index is larger than or equal to the threshold value VTHR2.

### (6) Modified Embodiment 6

Each parameter (for example, the threshold value VTHR1 or threshold value VTHR2) used for the processing by the controller 30 may be stored in the storage device 20 individually with respect to a plurality of users. The controller 30 executes various processes such as authentication or update, addition or deletion of a dictionary DIC based on a parameter group that the subject designates ahead of the authentication, among a plurality of parameter groups. In this configuration, in the case where one electronic appliance is shared by a plurality of users, it is possible to appropriately authenticate each user, resulting in an increase in convenience of the electronic appliance.

## Claims

1. A biometrics authentication apparatus comprising:
storage means for storing a dictionary containing biometrics information of a registered person;
information acquisition means for acquiring biometrics information of a subject person;
authentication means for authenticating validity of the subject person based on an index representing a degree of similarity between the biometrics information of the dictionary stored in the storage means and the biometrics information acquired by the information acquisition means; and
dictionary management means for updating the dictionary in the storage means based on the biometrics information acquired by the information acquisition means in a first case where the index represents a degree of the similarity higher than a first threshold value, and otherwise creating a new dictionary based on the biometrics information acquired by the information acquisition means and storing the created new dictionary in the storage means, in a second case where the index represents a degree of the similarity lower than the first threshold value and higher than a second threshold value which is set lower than the first threshold value.

2. The biometrics authentication apparatus according to claim 1, wherein the authentication means authenticates the validity of the subject person in the first case, and denies the validity of the subject person in a third case where the index represents a degree of the similarity lower than the second threshold value.

3. The biometrics authentication apparatus according to claim 1 or 2, further comprising auxiliary authentication means for authenticating the validity of the subject person separately from the authentication means, wherein
the dictionary management means creates the new dictionary when the auxiliary authentication means authenticates the validity of the subject person in the second case, and does not create the new dictionary when the auxiliary authentication means denies the validity of the subject person in the second case.

4. A biometrics authentication apparatus comprising:
storage means for storing a plurality of dictionaries each containing biometrics information of a registered person;
information acquisition means for acquiring biometrics information of a subject person;
authentication means for authenticating validity of the subject person based on a plurality of indexes corresponding to the plurality of the dictionaries, each index representing a degree of the similarity between the biometrics information of the corresponding dictionary stored in the storage means and the biometrics information acquired by the information acquisition means; and
dictionary management means being operative in a first case where a maximum index indicating the highest degree among the plurality of the indexes represents a degree of the similarity higher than a first threshold value, for updating a dictionary corresponding to the maximum index among the plurality of the dictionaries in the storage means, based on the biometrics information acquired by the information acquisition means, and being operative in a second case where the maximum index represents a degree of the similarity lower than the first threshold value and higher than a second threshold value which is set lower than the first threshold value, for creating a new dictionary based on the biometrics information acquired by the information acquisition means and storing the created new dictionary in the storage means.

5. The biometrics authentication apparatus according to claim 4, wherein the dictionary management means counts times of updating for each of the dictionaries stored in the storage means when each dictionary is updated by the dictionary management means, the apparatus further comprising dictionary reducing means for deleting from the storage means a dictionary which has the counted times of updating smaller than a threshold count.

6. The biometrics authentication apparatus according to claim 4, wherein the dictionary management means counts times of unupdating for each of the dictionaries stored in the storage means when each dictionary is not updated while other dictionary is updated by the dictionary management means, the apparatus further comprising dictionary reducing means for deleting from the storage means a dictionary which has the counted times of unupdating greater than a threshold count.

7. The biometrics authentication apparatus according to claim 4, wherein the dictionary management means evaluates a similarity between the plurality of the dictionaries stored in the storage means, the apparatus further comprising dictionary reducing means for reducing a pair of dictionaries whose similarity exceeds a threshold degree into one dictionary by merging the pair of the dictionaries with each other or deleting one of the pair of the dictionaries.

8. The biometrics authentication apparatus according to any one of claims 5 to 7, wherein the dictionary reducing means executes reducing of the dictionary when a total number of the dictionaries stored in the storage means has reached a predetermined number.

9. A biometrics authentication method comprising:
acquiring biometrics information of a subject person;
authenticating validity of the subject person based on an index representing a degree of similarity between biometrics information of a registered person contained in a dictionary stored in a storage and the acquired biometrics information of the subject person; and
updating the dictionary in the storage based on the acquired biometrics information in a first case where the index represents a degree of the similarity higher than a first threshold value, and otherwise creating a new dictionary based on the acquired biometrics information and storing the created new dictionary in the storage in a second case where the index represents a degree of the similarity lower than the first threshold value and higher than a second threshold value which is set lower than the first threshold value.

10. A machine readable medium for use in a computer having a storage for storing a dictionary containing biometrics information of a registered person, the machine readable medium containing program instructions executable by the computer for performing:
an information acquisition process of acquiring biometrics information of a subject person;
an authentication process of authenticating validity of the subject person based on an index representing a degree of similarity between the biometrics information of the registered person contained in the dictionary stored in the storage and the biometrics information of the subject person acquired in the information acquisition process; and
a dictionary management process of updating the dictionary in the storage based on the biometrics information acquired in the information acquisition process in a first case where the index represents a degree of the similarity higher than a first threshold value, and otherwise creating a new dictionary based on the biometrics information acquired in the information acquisition process and storing the created new dictionary in the storage in a second case where the index represents a degree of the similarity lower than the first threshold value and higher than a second threshold value which is set lower than the first threshold value.
